(19) Europäisches Patentamt
European Patent Office
Office européen des brevets

(11) **EP 2 249 435 A1**

(12) **EUROPEAN PATENT APPLICATION**

(43) Date of publication:
**10.11.2010 Bulletin 2010/45**

(51) Int Cl.:
*H01Q 3/26* (2006.01)    *H04B 7/08* (2006.01)

(21) Application number: **10172290.8**

(22) Date of filing: **21.04.2006**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.04.2005 US 674190 P**
**19.07.2005 US 186160**

(62) Document number(s) of the earlier application(s) in accordance with Art. 76 EPC:
**06769866.2 / 1 875 552**

(71) Applicant: **Qualcomm Incorporated**
**San Diego, CA 92121-1714 (US)**

(72) Inventors:
• **Naguib, Ayman Fawzy**
**Cupertino, CA 95014 (US)**
• **Gorokhov, Alexei**
**San Diego, CA 92121 (US)**

(74) Representative: **Hohgardt, Martin**
**Bardehle Pagenberg**
**Dost Altenburg Geissler**
**Galileiplatz 1**
**81679 München (DE)**

Remarks:
This application was filed on 09-08-2010 as a divisional application to the application mentioned under INID code 62.

(54) **Antenna array calibration for wireless communication systems**

(57)    A method of calibrating an antenna array comprising N antennas in a wireless network, comprising providing a first copy of an output transmit signal from an $n^{th}$ antenna to a receive chain of a $(n-1)^{th}$ antenna, where n is an integer greater than or equal to 2 and less than or equal to N, comparing the first copy of the output transmit signal to an output receive chain signal of the $(n-1)^{th}$ antenna to determine a first overall gain mismatch measurement, $B_n$, iterating the providing the first copy and the comparing the first copy for N-1 antennas in the array to collect N-1 measurements of $B_n$ for n=2 through N and determining a first chain mismatch, as well as a corresponding apparatus.

FIG. 2

EP 2 249 435 A1

**Description**

**CROSS-REFERENCE TO RELATED APPLICATIONS**

This application claims benefit under 35 U.S.C. § 119(e) from U.S. Provisional Patent application Serial No. 60/674,190 entitled "Antenna Array Calibration For Wireless Communication Systems" and filed April 22, 2005, the entirety of which is hereby incorporated by reference.

**BACKGROUND**

**I. Field**

The following description relates generally to wireless communications, and amongst other things to calibrating an antenna array by assessing and compensating for gain mismatches related to transmitting and receiving chains in the array.

**II. Background**

Wireless networking systems have become a prevalent means by which a majority of people worldwide has come to communicate. Wireless communication devices have become smaller and more powerful in order to meet consumer needs and to improve portability and convenience. The increase in processing power in mobile devices such as cellular telephones has lead to an increase in demands on wireless network transmission systems. Such systems typically are not as easily updated as the cellular devices that communicate there over. As mobile device capabilities expand, it can be difficult to maintain an older wireless network system in a manner that facilitates fully exploiting new and improved wireless device capabilities.

More particularly, frequency division based techniques typically separate the spectrum into distinct channels by splitting it into uniform chunks of bandwidth, for example, division of the frequency band allocated for wireless cellular telephone communication can be split into 30 channels, each of which can carry a voice conversation or, with digital service, carry digital data. Each channel can be assigned to only one user at a time. One commonly utilized variant is an orthogonal frequency division technique that effectively partitions the overall system bandwidth into multiple orthogonal subbands. These subbands are also referred to as tones, carriers, subcarriers, bins, and/or frequency channels. Each subband is associated with a subcarrier that can be modulated with data. With time division based techniques, a band is split time-wise into sequential time slices or time slots. Each user of a channel is provided with a time slice for transmitting and receiving information in a round-robin manner. For example, at any given time t, a user is provided access to the channel for a short burst. Then, access switches to another user who is provided with a short burst of time for transmitting and receiving information. The cycle of "taking turns" continues, and eventually each user is provided with multiple transmission and reception bursts.

Code division based techniques typically transmit data over a number of frequencies available at any time in a range. In general, data is digitized and spread over available bandwidth, wherein multiple users can be overlaid on the channel and respective users can be assigned a unique sequence code. Users can transmit in the same wide-band chunk of spectrum, wherein each user's signal is spread over the entire bandwidth by its respective unique spreading code. This technique can provide for sharing, wherein one or more users can concurrently transmit and receive. Such sharing can be achieved through spread spectrum digital modulation, wherein a user's stream of bits is encoded and spread across a very wide channel in a pseudo-random fashion. The receiver is designed to recognize the associated unique sequence code and undo the randomization in order to collect the bits for a particular user in a coherent manner.

A typical wireless communication network (*e.g.*, employing frequency, time, and code division techniques) includes one or more base stations that provide a coverage area and one or more mobile (*e.g.*, wireless) terminals that can transmit and receive data within the coverage area. A typical base station can simultaneously transmit multiple data streams for broadcast, multicast, and/or unicast services, wherein a data stream is a stream of data that can be of independent reception interest to a mobile terminal. A mobile terminal within the coverage area of that base station can be interested in receiving one, more than one or all the data streams carried by the composite stream. Likewise, a mobile terminal can transmit data to the base station or another mobile terminal. Such communication between base station and mobile terminal or between mobile terminals can be degraded due to channel variations and/or interference power variations. For example, the aforementioned variations can affect base station scheduling, power control and/or rate prediction for one or more mobile terminals.

When antenna arrays and/or base stations are employed in conjunction with a time domain duplexed (TDD) channel transmission technique, very large gains can be realized. A key assumption in realizing these gains is that due to the TDD nature of the transmission and reception, both the forward link (FL) and reverse link (RL) observe substantially the same physical propagation channel corresponding to a common carrier frequency. However, in practice the overall transmit and receive chains, which can include the analog front ends and the digital sampling transmitters and receivers, as well as the physical cabling and antenna architecture, contribute to the over all channel response experienced by the receiver. In other words, the receiver will see an overall or equivalent channel between the input of the transmitter digital to analog converter (DAC) and the output of the receiver analog to digital converter (ADC), which can comprise the analog chain of the transmitter, the physical propagation channel, the physical antenna array structure (including cabling), and the analog receiver chain.

In view of at least the above, there exists a need in the art for a system and/or methodology of improving gain assessment and manipulation in antenna arrays employed in wireless network systems.

## SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with calibrating antenna arrays in a wireless network environment. According to one aspect, copies of transmitted signals from one or more antennas in the array can be provided to a receive chain of one or more antennas, including the antenna from which the copy is obtained, and compared to a receive chain output signal to determine overall gain mismatch in the array. Measurements of gain mismatch can be obtained for each antenna in the array to facilitate determining gain mismatch due to receive chains and gain mismatch due to transmit chains of antennas in the array. Based at least in part on such measurements, antennas in the array can be calibrated to compensate for undesirably large gains.

According to an aspect, a method of calibrating an antenna array in a wireless network comprises providing an output transmit signal from a transmit chain of a first antenna to a receive chain of the first antenna, and comparing output transmit signal to an output receive chain signal and determining a first overall gain mismatch measurement, $A_n$. This procedure can be repeated for all antennas in the array to obtain N measurements of $A_n$, where N is the number of antennas in the array. The output transmit signal can then be compared to a receive chain output signal from a next antenna in the array to obtain an overall gain mismatch measurement $B_n$, and such can similarly be reiterated for each antenna in the array until N-1 measurements of $B_n$ are obtained. Gain mismatches due to receiver chains and transmit chains can then be determined based at least in part on the N measurements of $A_n$ and the N-1 measurements of $B_n$.

According to a related aspect a method of calibrating an antenna array comprises providing a copy of an output transmit signal or output transmit signal from a transmit chain of a first antenna to receive chains of all antennas in the array, and comparing the copy of the output transmit signal to an output receive chain signal at each antenna in the array and determining a first overall gain mismatch measurement, $A_n$. The method can be iterated for each antenna in the array to collect N measurements of $A_n$, where N is the number of antennas in the array. A copy of an output transmit signal from each antenna in the array can then be provided to a receive chain of the first antenna, and compared to an output receive chain signal of the first antenna to determine a second overall gain mismatch measurement, $B_n$, which can be iterated for each antenna in the array to collect N measurements of $B_n$. Gain mismatches due to receiver chains and transmit chains can then be determined based at least in part on the N measurements of $A_n$ and the N measurements of $B_n$.

According to another aspect, an apparatus that facilitates calibrating an antenna array in a wireless network can comprise a calibration component that generates a model of a receive chain output signal for each antenna in the array, a sampling component that generates a copy of a transmit chain output signal for each antenna in the array, and a mismatch estimation component that determines gain mismatch attributable to transmit chains of antennas in the array and to receive chains of antennas in the array. The calibration component can compare transmit signal copies to receive chain output signals for each antenna to generate a plurality of mismatch measurements, which can then be utilized to facilitate antenna calibration to mitigate undesired gains associated with receiver chains and/or transmit chains.

According to still another aspect, an apparatus that facilitates calibrating an antenna array and mitigating gain mismatch in a wireless network can comprise means for copying a transmit chain output signal transmitted from each antenna in the array, and means for comparing the transmit chain output signal copy of each antenna to a receive chain output signal from every antenna in the array to obtain a plurality of gain mismatch measurements. The apparatus can further comprise means for estimating gain mismatch due to the transmit chains of antennas in the array and gain mismatch due to the receive chains in the array. Additionally, the apparatus can comprise means for compensating for gain mismatch to calibrate the array.

Yet another aspect relates to a computer-readable medium having stored thereon computer-executable instructions for generating a copy of a transmit chain output signal transmitted from each antenna in an antenna array and comparing the transmit chain output signal copy of each antenna to a receive chain output signal from every antenna in the array to obtain a plurality of gain mismatch measurements. The computer-readable medium can further comprise instructions for determining gain mismatch in the array based at least in part on the plurality of gain mismatch measurements, and for compensating for gain mismatch by generating a pre-multiplier by which a signal to be transmitted can be adjusted.

A further aspect provides for a microprocessor that executes instructions for calibrating an antenna array in a wireless network environment, the instructions comprising generating a copy of a transmit chain output signal transmitted from each antenna in an antenna array, comparing the transmit chain output signal copy of each antenna to a receive chain output signal from every antenna in the array to obtain a plurality of gain mismatch measurements, determining overall gain mismatch based at least in part on the plurality of gain mismatch measurements, generating a pre-multiplier by which a signal to be transmitted can be adjusted, and calibrating each antenna in the array using the pre-multiplier.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

**BRIEF DESCRIPTION OF THE DRAWINGS**

FIG. 1 illustrates an antenna arrangement comprising a receiver chain and a transmitter chain in accordance with various aspects described herein.

FIG. 2 is an illustration of an antenna array comprising N antennas, which can be calibrated utilizing a technique in accordance with various embodiments.

FIG. 3 is an illustration of an antenna array comprising N antennas that can be calibrated in accordance with one or more aspects described herein.

FIG. 4 is an illustration of a system that facilitates calibrating an antenna array to compensate for gain mismatch in accordance with various aspects.

FIG. 5 is an illustration of a system that facilitates antenna array calibration and compensation for gain mismatch errors in accordance with various aspects.

FIG. 6 is an illustration of a system that facilitates calibrating an array of N antennas in a wireless communication environment in accordance with one or more aspects.

FIG. 7 is an illustration of a system that facilitates antenna array calibration in a wireless communication environment in accordance with one or more aspects.

FIG. 8 illustrates a methodology for determining gain mismatches across an antenna array and/or across individual antennas therein to facilitate calibration of the antenna array.

FIG. 9 is an illustration of a methodology for representing mismatch errors in accordance with one or more embodiments.

FIG. 10 illustrates a methodology for calibrating an antenna array in accordance with various aspects set forth herein.

FIG. 11 is an illustration of a methodology for calibrating an antenna array.

FIG. 12 illustrates a methodology for calibrating an antenna array when automatic gain control is employed.

FIG. 13 is an illustration of a wireless network environment that can be employed in conjunction with the various systems and methods described herein.

**DETAILED DESCRIPTION**

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

As used in this application, the terms "component," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. One or more components may reside within a process and/or thread of execution and a component may be localized on one computer and/or distributed between two or more computers. Also, these components can execute from various computer readable media having various data structures stored thereon. The components may communicate by way of local and/or remote processes such as in accordance with a signal having one or more data packets (*e.g.*, data from one component interacting with another component in a local system, distributed system, and/or across a network such as the Internet with other systems by way of the signal).

Furthermore, various embodiments are described herein in connection with a subscriber station. A subscriber station can also be called a system, a subscriber unit, mobile station, mobile, remote station, access point, base station, remote terminal, access terminal, user terminal, user agent, user equipment, *etc.* A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

Moreover, various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g.*, hard disk, floppy disk, magnetic strips...), optical disks (*e.g.*, compact disk (CD), digital versatile disk (DVD)...), smart cards, flash memory devices (*e.g.*, card, stick, key drive...), and integrated circuits such as read only memories, programmable read only memories, and electrically erasable programmable read only memories.

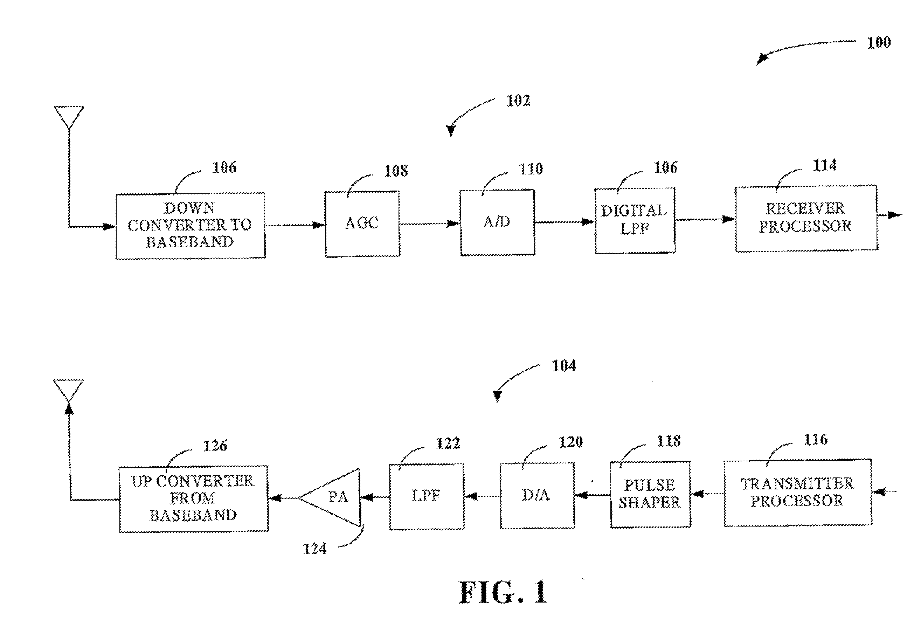

Referring now to the drawings, **Fig. 1** illustrates an antenna arrangement 100 comprising a receiver chain 102 and a transmitter chain 104 in accordance with various aspects described herein. Receiver chain 102 comprises a down converter component 106 that down converts a signal to a baseband upon receipt. Down converter component 106 is operatively connected to an automatic gain control (AGC) component 108 that assesses received signal strength and automatically adjusts a gain applied to the received signal to maintain receiver chain 102 within its associated linear operation range and to provide a constant signal strength for outputting through transmitter chain 104. It will be appreciated that AGC component 108 can be optional to some embodiments described herein (*e.g.*, automatic gain control need not be performed in conjunction with every embodiment). AGC component 108 is operatively coupled to an analog-to-digital (A/D) conversion component 110 that converts the received signal to digital format before the signal is smoothed by a digital low-pass-filter (LPF) 112 that can mitigate short-term oscillations in the received signal. Finally, receiver chain 102 can comprise a receiver processor 114 that processes the received signal and can communicate the signal to one or more components of transmitter chain 104.

Transmitter chain 104 can comprise a transmitter processor 116 that receives a signal from receiver chain 102 (*e.g.*, transmitter receives a signal that was originally received by receiver chain 102 and subjected to various processes associated with the components thereof, ...). Transmitter processor 116 is operatively coupled to a pulse shaper 118 that can facilitate manipulating a signal to be transmitted such that the signal can be shaped to be within bandwidth constraints while mitigating and/or eliminating inter-symbol interference. Once shaped, the signal can undergo digital-to-analog (D/A) conversion by a D/A converter component 120 before being subjected to an operatively associated low-pass filter (LPF) 122 in transmitter chain 104 for smoothing. A pulse amplifier (PA) component 124 can amplify the pulse/signal before up-conversion to the baseband by an up-conversion component 126.

Antenna arrangement 100 can be one of a plurality of such arrangements in an antenna array. Such an array can be employed in conjunction with a time domain duplexed (TDD) channel transmission protocol that can lead to undesired gains. In accordance with various embodiments described herein, undesired gains can be mitigated through calibration of antennas 100 in an array. TDD typically involves the application of a time domain multiple access (TDMA) protocol to separate incoming and outgoing signals. TDD can facilitate dynamic allocation of finite bandwidth in cases where forward and reverse links are asymmetric and data transmission speed is variable.

In general, TDD transmission protocols facilitate channel reciprocity for a physical propagation channel. Thus, where a noticeable difference is observed between transfer characteristics of analog parts of transmitter chain 104 and receiver chain 102 and/or samples thereof, reciprocity of the equivalent channel and/or transmitter/receiver variations may not be assumed. When calibrating an array of antennas 100, an understanding of the magnitude of variations observed at various analog components and their influence on the accuracy of a reciprocity assumption when applied to the equivalent channel may be utilized in order to facilitate the calibration process. Furthermore, in the case of an antenna array systems, each antenna 100 on both of the transmit and receive sides has a transmitter chain 104 and a receiver chain 102. Transmitter chain 104 of each antenna 100 often does not exhibit the same properties across all antennas 100 in the array. The same can be true for receiver chains 102 of each antenna 100. In such cases, the array of antennas 100 can be calibrated to facilitate compensating for gain mismatches between individual antennas 100.

For example, mismatches can be due to the physical structure of the antenna 100. Such mismatches can include, for instance, mutual coupling effects, tower effects, imperfect knowledge of element locations, amplitude and/or phase mismatches due to antenna cabling, and the like. Additionally, mismatches can be due to hardware elements in transmitter chain 104 and/or receiver chain 102 of each antenna 100. For example, such mismatches can be associated with analog filters, I and Q imbalance, phase and/or gain mismatch of a low-noise amplifier or a pulse amplifier in the chains, various non-linearity effects, *etc.*

When calibrating to compensate for mutual coupling, other non-ideal effects related to the physical structure of antenna array elements, and/or cabling, the effects of such non-ideal instances can be expressed using a distortion matrix, C, such that a "distorted" antenna array channel vector can be described as:

$$\bar{h} = C \cdot h \qquad (1)$$

Generally, where antenna elements are substantially identical and antenna tower design minimizes undesired distortion effects thereof, the distortion matrix $C$ need not be dependent on the channel vector $h$.

In an antenna array application where angle and/or arrive estimation is utilized, an assumption can be made that signals arriving at the array will have minimal or no angle spread, such that the distortion matrix $C$ can be estimated and compensated for. Conversely, when no assumption (either explicit or implicit) is made regarding the angle spread and only the vector $h$ needs to be estimated, then the distortion matrix **C** can be treated as part of the overall physical propagation channel, and only the composite channel vector $\bar{h}$ need be estimated to facilitate calibration of the antenna array. The effect of the distortion matrix $C$ in the case can be such that the composite channel vector $\bar{h}$ can have a non-identity correlation matrix.

In order to calibrate the antenna array, an exemplary mathematical model is provided to represent mismatch errors between receiver chains 102 and transmitter chains 104 of antennas 100 therein, although other models can be employed to achieve array calibration in conjunction with the methods and systems described herein. Additionally, although various aspects are described with regard to frequency domain signals and array calibration, it will be appreciated that calibration can be performed in the time domain (*e.g.*, using a narrow band signal, *etc.*) as well. For example, receive chain 102 can be considered and, for purposes of illustration and simplicity, an assumption can be made that an input to receiver chain 102 of an $n^{\text{th}}$ antenna 100 comprises a single radio frequency tone, such that the mismatch error can be represented as:

$$x_n(t) = \mathrm{Re}\left\{ s(t).e^{j(\omega+\Omega)t} \right\} \qquad (2)$$

Once the signal has been down-converted to the digital baseband by the down-conversion component 106, the output signal can be represented as:

$$y_n(kT_s) = (1+\varepsilon_n)e^{j\Omega kT_s} \cdot s(t) + v_n(kT_s) \qquad (3)$$

where $\varepsilon_n$ is a complex constant that represents the total complex mismatch gains in addition to the receiver chain 102 (*e.g.,* I and Q imbalance, *etc.*), and $v_n$ represents the additive distortion effects along the receiver chain 102 (*e.g.*, A/D DC offset, A/D quantization noise and/or dynamic range effects, AGC, *etc.).* Thus, at the end of the receiver chain 102, the overall channel at the receiver chain 102 output can be represented as:

$$\tilde{h}_n = \alpha_n \cdot h_n + v_n \qquad (4)$$

where $\alpha_n = 1 + \varepsilon_n$.

The antenna array can be designed such that the additive measurement $v_n$ can be much less than an additive effect associated with white Gaussian noise, interference, *etc.*, at each antenna 100, and therefore can, in some embodiments, be ignored (*e.g.*, in addition to the effect of the measurement, noise can be minimized by averaging the measurement over a number of frames, ...). Accordingly, calibration of antenna 100 against receive chain 102 mismatch can be performed in conjunction with estimating the multiplicative mismatch gains $\alpha_n, n=1,\cdots,N$. Given these mismatch estimates, they can be compensated for as follows:

$$\hat{h}_n = \frac{\alpha_n^*}{|\alpha_n|^2} \cdot \tilde{h}_n \qquad n = 1,...,N \qquad (5)$$

In a similar manner, the mismatch to the transmit antenna channel due to the transmit chain 104 can be modeled as:

$$\widehat{h}_n = \beta_n \cdot h_n \qquad (6)$$

In this case, calibrating the array against the transmit chain 104 mismatch amounts to estimating the multiplicative mismatch gains $\beta_n$, $n = 1,\cdots, N$. Given these mismatch estimates, they can be compensated for by pre-multiplying the transmitted signal from antenna $n$ as follows:

$$\hat{s}_n = \frac{\beta_n^*}{|\beta_n|^2} \cdot s_n \qquad n = 1,...,N \qquad (7)$$

While Fig. 1 depicts and describes one embodiment of receiver chain 102 and transmitter chain 104 other layouts and structures may be utilized. For example, a different number of components may be used in both receiver chain 102 and transmitter chain 104. Additionally, different devices and structures may also be substituted.

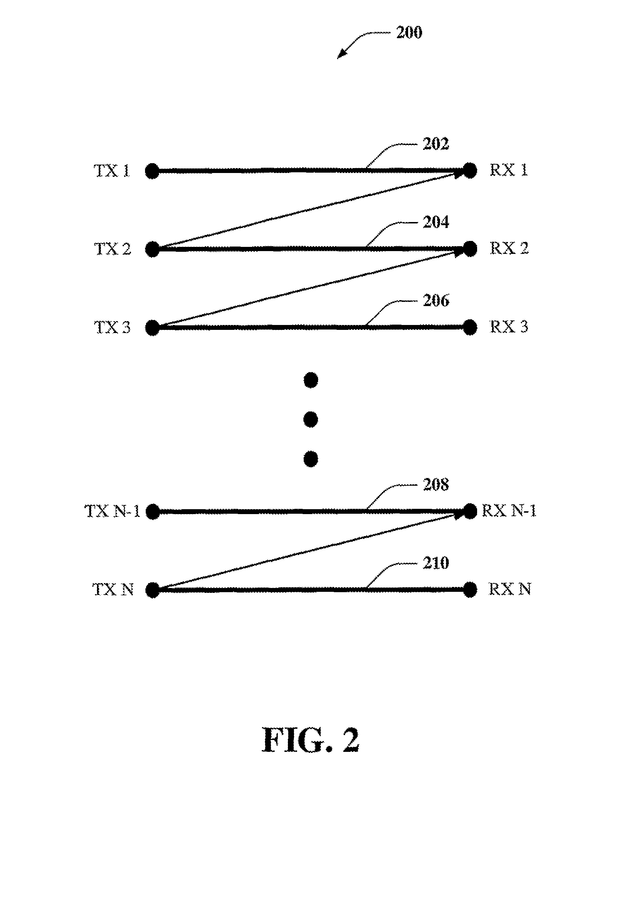

**Fig. 2** is an illustration of an antenna array 200 comprising N antennas, which can be calibrated utilizing a technique in accordance with various embodiments. Array 200, as depicted, comprises a first antenna 202, a second antenna 204, and a third antenna 206, as well as a second-to-last ($n$-1) antenna 208 and a last ($n^{th}$) antenna 210. Antennas 202, 204, 206, 208, and 210 each have a transmitting end designated by "TX" and a receiving end designated by an "RX," each of which can be similar to the transmitting and receiving chains described with regard to Fig. 1, respectively.

According to an aspect, a calibration technique can compensate for RX/TX chain mismatch using the actual transmitted signal. As described with regard to Fig. 1, let $\alpha_n$ and $\beta_n$ represent receive chain and transmit chain mismatches, respectively, for antenna $n$, where $n = 1,...,N$. For example, during transmission, or at other times during which the receiver chain is not receiving a signal, a copy of the signal transmitted or the transmitted signal from the transmit chain TX N antenna $n$ 210 can be provided to the receive chain RX N of antenna $n$ 210. The copy of the transmitted signal can be compared to a signal at the output of the receive chain RX N for antenna $n$ 210 to obtain the measurement $A_n = \alpha_n \cdot \beta_n$ to describe overall mismatch. In order to facilitate calibration of all antennas in array 200, $N$ measurements $\{A_n\}_{1\cdots N}$ can be collected.

According to a related aspect, a copy of the signal from the output TX N of antenna $n$ 210 can be provided to the receive chain RX (N-1) of antenna $n$-1 208. A comparison of the signal output from the transmitter chain TX N of antenna $n$ and the signal at the output of the receive chain RX (N-1) of antenna $n$-1 208 can be performed to obtain the measurement $B_n = \alpha_{n-1} \cdot \beta_n$ to determine overall mismatch. $N$-1 measurements $\{B_n\}_{2\cdots N}$ can be collected to facilitate calibration of the array 200. Given the $N$ measurements $\{A_n\}_{1\cdots N}$ and the $N$-1 measurements $\{B_n\}_{2\cdots N}$, the receive chain mismatch gains $\{\alpha_n\}_{1\cdots N}$ can be estimated, up to any arbitrary constant $\alpha$, as follows: Let $\alpha_1 = \alpha$, then

$$\alpha_n = \alpha \cdot \prod_{i=2}^{n} \frac{A_i}{B_i} \qquad n = 2,...,N \qquad (8)$$

Similarly, given the $N$ measurements $\{A_n\}_{1\cdots N}$ and the $N$-1 measurements $\{B_n\}_{2\cdots N}$, we can easily see that the transmit chain mismatch gains $\{\beta_n\}_{1\cdots N}$ can be estimated, up to any arbitrary constant $\beta$, as follows. Let $\beta_1 = \beta$, then

$$\beta_n = \beta \cdot \prod_{i=2}^{n} \frac{B_i}{A_{i-1}} \qquad (9)$$

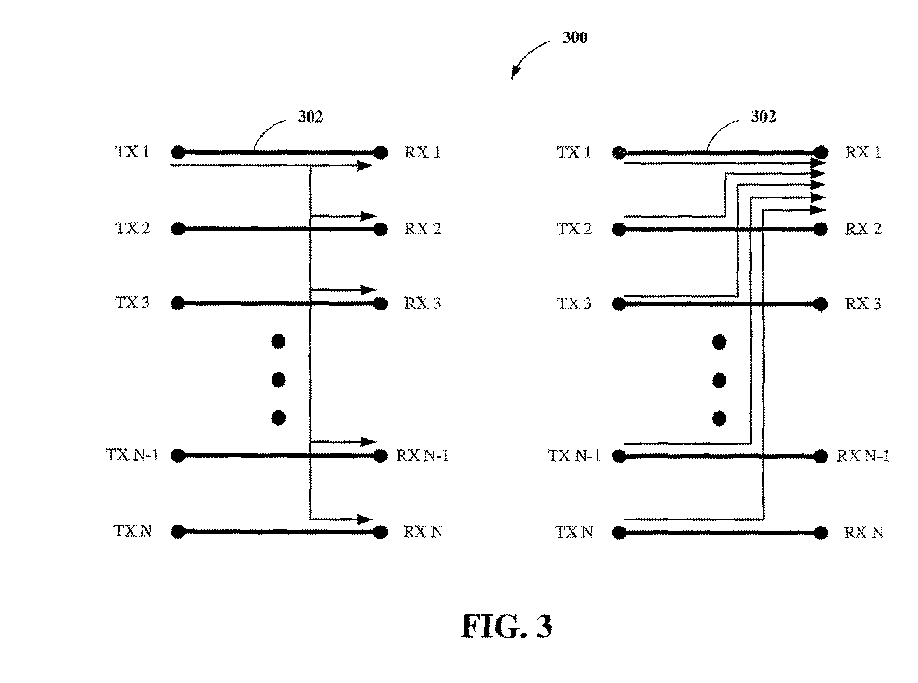

**Fig. 3** is an illustration of an antenna array 300 comprising $N$ antennas that can be calibrated in accordance with one or more aspects described herein. The array 300 comprises a plurality of antennas 1-N as described with regard to Figure 2. During transmission or any other time during which a receive chain is not receiving a signal, a copy of the signal transmitted or the transmitted signal, from any antenna 1-N can be provided to the receive chains of all other antennas in the array 300. The copy of the transmitted signal for the given antenna can be compared to a signal at the output of all receive chains to determine the measurement $A_n = \alpha_n \cdot \beta_1$ of overall mismatch in the array. N measurements $\{A_n\}_{1\cdots N}$ can be taken, and receive chain mismatch gains $\{\alpha_n\}_{1\cdots N}$ can be estimated up to an arbitrary constant $\alpha$, as follows: Let $\alpha_1 = \alpha$, then

$$\alpha_n = \alpha \cdot \frac{A_n}{A_1} \quad n = 2, ..., N \qquad (10)$$

Subsequently, during the same or another period in which the receive chains are not receiving, copies of the transmitted signals from all antennas 1-N can be provided to the receive chain of the first antenna 302, for example at an antenna port associated therewith, in succession. The copies of the signals transmitted from antennas 1-N can be compared to an output signal at the output of the receive chain for the first antenna 302 to obtain a measurement of overall mismatch $B_n = \alpha_1 \cdot \beta_n$. N measurements $\{B_n\}_{1\cdots N}$ can be collected, and the transmit chain mismatch gains $\{\beta_n\}_{1\cdots N}$ can be estimated up to an arbitrary constant $\beta$ as follows: Let $\beta_1 = \beta$, then

$$\beta_n = \beta \cdot \frac{B_n}{B_1} \quad n = 2, ..., N \qquad (11)$$

Because mismatches vary slowly with time, such estimates can be averaged over time to mitigate any adverse effects associated with additive noise, *etc.*

It will be appreciated that the functions and/or processes described herein with regard to Figs. 2 and 3 can be performed in conjunction with a processor and memory, such as the processors described with regard to Fig. 1. Additionally, it will be appreciated that while the foregoing aspects and/or embodiments describe antenna calibration in conjunction with a narrowband signal and/or measurement bandwidth, such calibration techniques can be performed in conjunction with an OFDM, OFDMA, *etc.*, signal. In such a case, signals can be measured at different radio frequency tones, such that each signal is a narrowband signal in itself. Moreover, in a scenario in which automatic gain control is employed, calibration of an antenna array can be repeated for multiple gain settings to account for element mismatch at different gain settings despite constant gain across the array.

Additionally, one or more signal splitters and/or switches can be employed to measure mismatch gains. For example, the method of Fig. 2 can employ 1-to-2 and/or 2-to-1 splitters, while the method of Fig. 3 can employ 8-to-1 and 1-to-8 splitters, and any gain and/or phase mismatch related to the employment of such splitters can be accounted for.

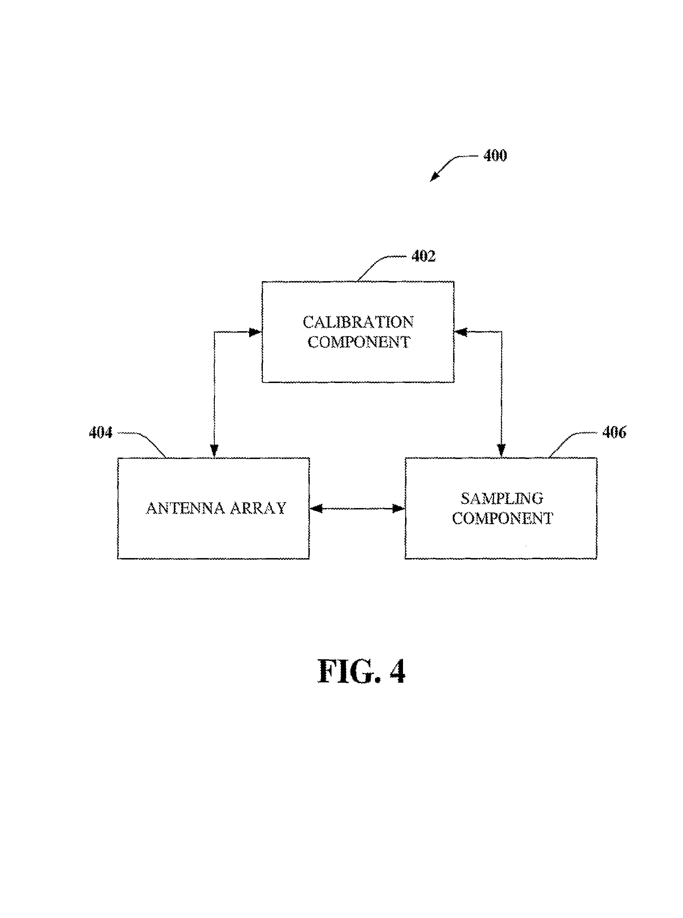

**Fig. 4** is an illustration of a system 400 that facilitates calibrating an antenna array to compensate for gain mismatch in accordance with various aspects. The system comprises a calibration component 402 that is operatively associated with an antenna array 404 and a sampling component 406. Calibration component 402 can facilitate generation and manipulation of a mathematical model for communication signals to assess $\varepsilon_n$ as detailed above with regard to Fig. 1. Additionally, calibration component 402 can assess distortion effects $v_n$ associated with the receiver chain of the antenna being assessed. Calibration component 402, in conjunction with sampling component 406, can perform multiple iterations of the above for all antennas 1-$N$ in array 404 to determine an overall output channel representation for each receiver chain output of each antenna 1-$N$ in array 404. For example, each receiver output signal can be represented as detailed above as:

$$\tilde{h}_n = \alpha_n \cdot h_n + v_n \qquad (4)$$

where $\alpha_n = 1 + \varepsilon_n$.

It will be appreciated that the foregoing can be performed as described with regard to Fig. 1, and in conjunction with one or more aspects set forth with regard to Figs. 2 and 3, above. For example, upon assessing receiver chain output for each antenna in array 404, calibration component 402 can direct sampling component 406 to retrieve a copy of the signal transmitted or the transmitted signal from a first antenna in antenna array 404, and calibration component 402 can provide the copy to a receiving chain output of the first antenna in array 404 to for comparison to the signal output at the end of the receiving chain of the first antenna. In a similar manner, calibration component 402 can provide the copy of the signal transmitted from the first antenna to the receiving chain of a second antenna in array 404 for comparison, and so on.

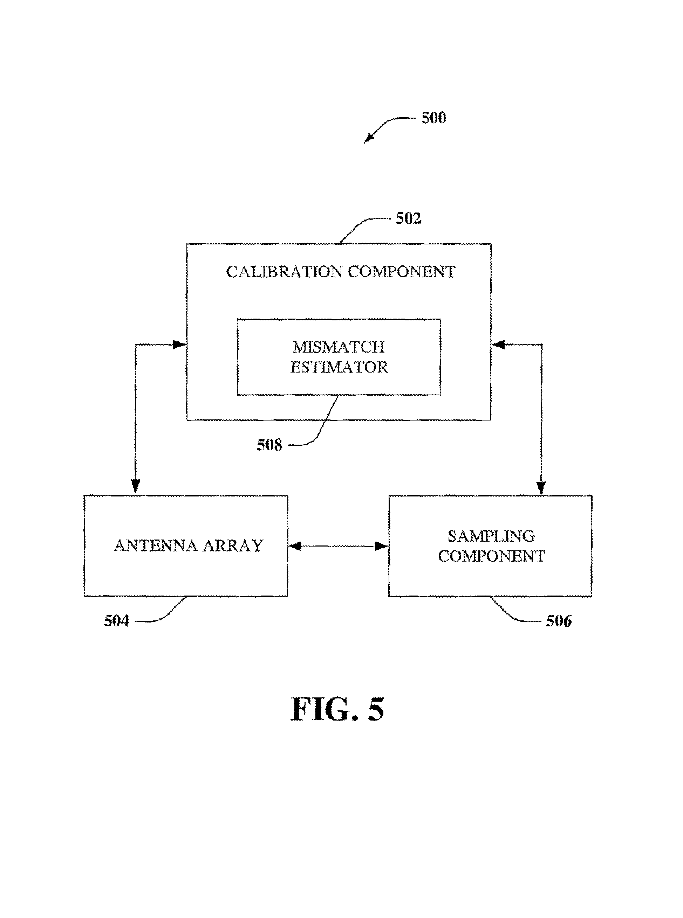

**Fig. 5** is an illustration of a system 500 that facilitates antenna array calibration and compensation for gain mismatch errors in accordance with various aspects. The system 500 comprises a calibration component 502 that is operatively coupled to an antenna array 504 and a sampling component 506 as detailed above with regard to Fig. 4. Calibration component 502 comprises a mismatch estimation component 508 that analyzes models receiver chain output signals and/or comparisons between receiver chain output signals and transmission signal copies provided by sampling component 506 and calibration component 504. Calibration component 502 can calibrate each antenna in the array 504 utilizing receive chain mismatch estimated by the mismatch estimation component 508, which can determine the multiplicative mismatch gains $\alpha_n, n = 1, \cdots, N$ for the $N$ antennas in the array 504. Given these mismatch estimates, they can be compensated for by calibration component 502 as follows:

$$\hat{h}_n = \frac{\alpha_n^*}{|\alpha_n|^2} \cdot \tilde{h}_n \qquad n = 1, ..., N \qquad (5)$$

Similarly, and as described with regard to Fig. 1, mismatch to the transmit antenna channel due to the transmit chain of each antenna can be modeled by mismatch estimation component 508 as:

$$\widetilde{h}_n = \beta_n \cdot h_n \qquad (6)$$

Calibrating the array against the transmit chain mismatch can comprise estimating the multiplicative mismatch gains $\beta_n$, $n = 1, \cdots, N$. Given these mismatch estimates, calibration component 502 can compensate for mismatch by pre-multiplying the transmitted signal from antenna $n$ as follows:

$$\hat{s}_n = \frac{\beta_n^*}{|\beta_n|^2} \cdot s_n \qquad n = 1, ..., N \qquad (7)$$

In order to fine tune array 504 and complete the calibration process, calibration component 502 can employ the procedure detailed with regard to Figure 2 above and/or Figure 3, depending on which procedure best suits system design goals and/or in accordance with any other constraints that may apply to a particular antenna array, *etc.*

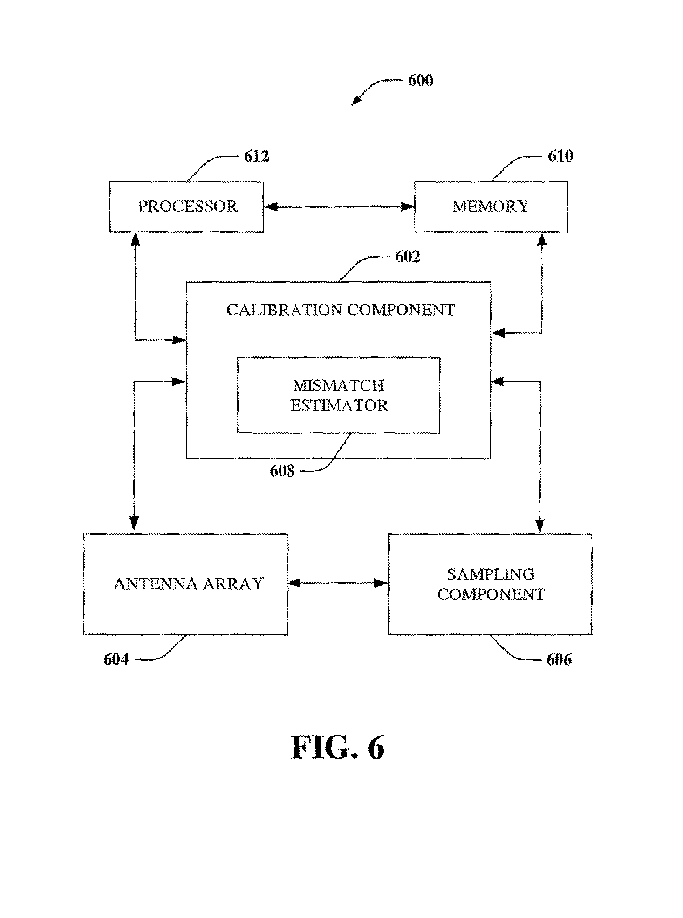

**Fig. 6** is an illustration of a system 600 that facilitates calibrating an array of N antennas in a wireless communication environment in accordance with one or more aspects. The system 600 comprises a calibration component 602 that is operatively coupled to an antenna array 604 and a sampling component 606. Calibration component 602 can model and manipulate a receiver chain output signal for each antenna in array 604 and for comparison with transmitted signal copies from one or more antennas in array 604. Calibration component 602 further comprises a mismatch estimator 608 that compares receiver chain output signals to transmitter chain output signal copies to determine gain mismatch estimates related thereto, which can be employed to calibrate array 604 as described with regard to the preceding figures.

System 600 can additionally comprise memory 610 that is operatively coupled to calibration component 602 and that stores information related to array calibration, output signal representations/copies and/or comparison information, mismatch estimation data associated, calibration data, *etc.*, and any other suitable information related to calibrating antenna array 604. A processor 612 can be operatively connected to calibration component 602 (and/or memory 610) to facilitate analysis of information related to signal modeling, mismatch estimation, antenna calibration, and the like. It is to be appreciated that processor 612 can be a processor dedicated to analyzing and/or generating information received by calibration component 602, a processor that controls one or more components of system 600, and/or a processor that both analyzes and generates information received by calibration component 602 and controls one or more components of system 600.

Memory 610 can additionally store protocols associated with generating signal copies and models/representations, mismatch estimations, *etc.*, such that system 600 can employ stored protocols and/or algorithms to achieve antenna calibration and/or mismatch compensation as described herein. It will be appreciated that the data store (*e.g.*, memories) components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The memory 610 of the subject systems and methods is intended to comprise, without being limited to, these and any other suitable types of memory.

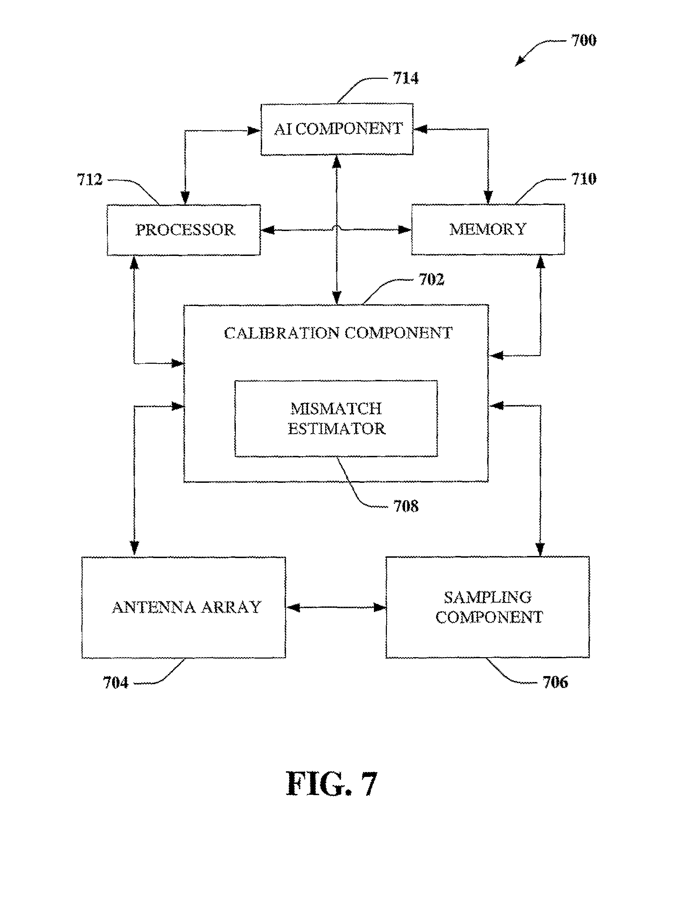

**Fig. 7** is an illustration of a system 700 that facilitates antenna array calibration in a wireless communication environment in accordance with one or more aspects. The system 700 can comprise a calibration component 702 that is operatively coupled to an antenna array 704 and a sampling component 706, each of which is further operatively associated with the other. Calibration component 702 can generate models of, and manipulate, a receiver chain output signal for each antenna in array 704 for comparison with transmitted signal copies from one or more antennas in array 604. Calibration component 702 comprises a mismatch estimator 708 that compares receiver chain output signals to transmitter chain output signal copies to determine gain mismatch estimates related thereto, which in turn can be employed to calibrate array 704, as described with regard to the preceding figures.

System 700 can additionally comprises a memory 710 and a processor 712 as detailed above with regard to Fig. 6. Moreover, an AI component 714 can be operatively associated with calibration component 702 and can make inferences regarding array calibration, mismatch estimation, signal modeling, *etc.* As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

According to an example, AI component 714 can infer an appropriate calibration technique and/or manner of employing such technique, based at least in part on, for instance, transmit/receive schedules, processing constraints, resource availability, *etc.* According to this example, it can be determined that a particular antenna in an array is receiving a signal during a period in which the receive chain of the antenna may be inactive (*e.g.*, to receive a copy of a signal from a transmit chain, *etc.*), such as can be due to an incoming emergency signal, high communication traffic and the like. AI component 714, in conjunction with processor 712 and/or memory 710, can determine that the receive chain of the particular antenna is occupied, and can infer that the calibration technique may be suspended, the antenna may be passed over and slated for later assessment, *etc.* In such a case, AI component 714 can facilitate antenna array calibration in a most efficient manner possible to mitigate transmission costs and increase communication efficiency. According to another example, AI component 714 can infer that a calibration technique may be reiterated at various gain levels, such as when automatic gain control is utilized in the antenna array. It will be appreciated that the foregoing examples are illustrative in nature and are not intended to limit the scope of inferences that can be made by AI component 714 or the manner in which AI component 714 makes such inferences.

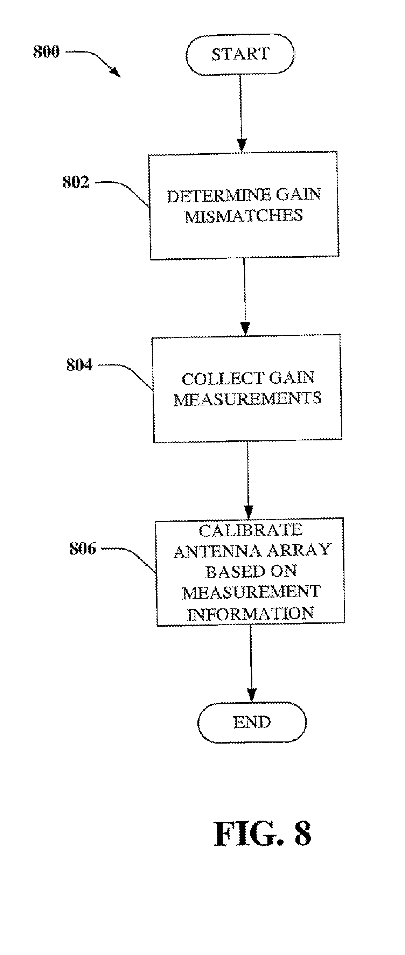

Referring to Figs. **8-12,** methodologies relating to generating supplemental system resource assignments are illustrated. For example, methodologies can relate to antenna array calibration in a TDMA environment, an OFDM environment, an OFDMA environment, a CDMA environment, or any other suitable wireless environment. While, for purposes of simplicity of explanation, the methodologies are shown and described as a series of acts, it is to be understood and appreciated that the methodologies are not limited by the order of acts, as some acts may, in accordance with one or more embodiments, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more embodiments.

**Fig. 8** illustrates a methodology 800 for determining gain mismatches across an antenna array and/or across individual antennas therein to facilitate calibration of the antenna array. At 802, gain mismatches $\alpha_n$ and $\beta_n$ can be assessed by comparing a copy of the signal transmitted or the transmitted signal from an output of a transmit chain for a first antenna to a receiver chain output signal associated with the first antenna. The transmitted signal copy can then be compared to a receiver chain output signal for a second antenna to determine a gain mismatch there between. Multiple iterations can be performed at 804 to collect measurements for the entire array. For example, a copy of a signal transmitted from the second antenna transmit chain can be provided to a receiver chain of a third antenna to determine a mismatch gain there between, and so on until gain mismatches for all antennas have been collected. At 806, the antenna array can be calibrated in accordance with protocols described with regard to preceding figures.

For example, the calibration technique set forth with regard to Fig. 2 can be employed in conjunction with method 800 to achieve antenna calibration, such that copies of respective transmission signals are provided to receiver chains of sequential neighboring antennas in an array in order to determine gain mismatches. Additionally and/or alternatively, the calibration technique of Fig. 3 can be employed in conjunction with method 800 to facilitate antenna array calibration, such that a copy of a first antennas transmitted signal is provided to receiver chains of all other antennas in the array to determine $\alpha_n$, and copies of all other antenna's transmitted signals are provided to the first antenna's receiver chain to determine $\beta_n$.

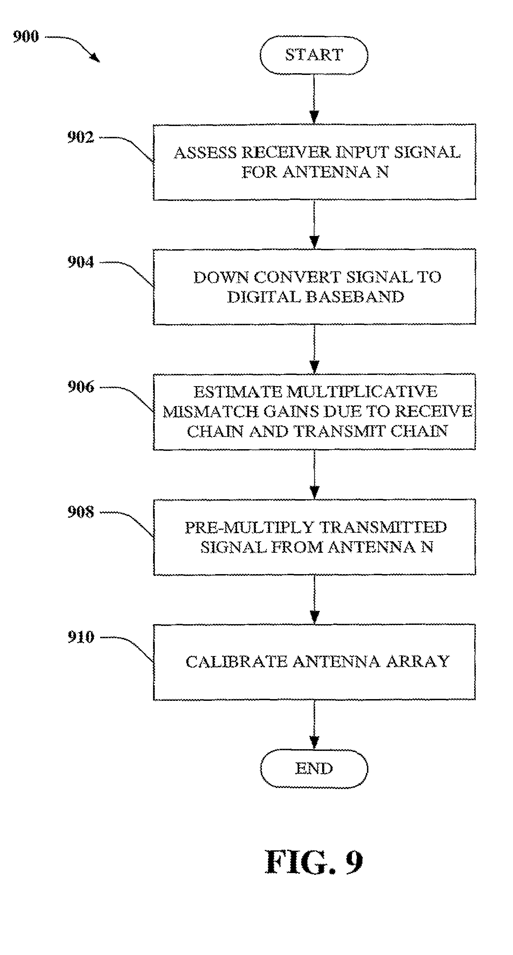

**Fig. 9** is an illustration of a methodology 900 for representing mismatch errors in accordance with one or more embodiments. At 902, a receiver chain input signal (*e.g.*, a signal being received by an antenna) can be analyzed and modeled, as set forth with regard to equation (2).

$$x_n(t) = \text{Re}\left\{ s(t).e^{j(\omega+\Omega)t} \right\} \qquad (2)$$

At 904, the input signal can be down converted to a baseband, and an output signal for the receiver chain can be represented as set forth in equation (3).

$$y_n(kT_s) = (1 + \varepsilon_n)e^{j\Omega kT_s} \cdot s(t) + v_n(kT_s) \qquad (3)$$

Multiplicative mismatch gains $\alpha_n$ and $\beta_n$, due to receive and transmit chains, respectively, for the antenna, can be estimated at 906, as set forth with regard to equations (4) and (6).

$$\tilde{h}_n = \alpha_n \cdot h_n + v_n \qquad (4)$$

$$\widehat{h}_n = \beta_n \cdot h_n \qquad (6)$$

At 908, signals can be pre-multiplied as described with regard to equations (5) and (7).

$$\hat{h}_n = \frac{\alpha_n^*}{|\alpha_n|^2} \cdot \tilde{h}_n \qquad n = 1,...,N \qquad\qquad (5)$$

$$\hat{s}_n = \frac{\beta_n^*}{|\beta_n|^2} \cdot s_n \qquad n = 1,...,N \qquad\qquad (7)$$

Finally, at 910, the antenna array can be calibrated against the receive chain and transmit chain mismatch estimates. Calibration of the antenna array can be performed utilizing one of the calibration techniques described with regard to Figs. 2 and 3, which are further detailed below.

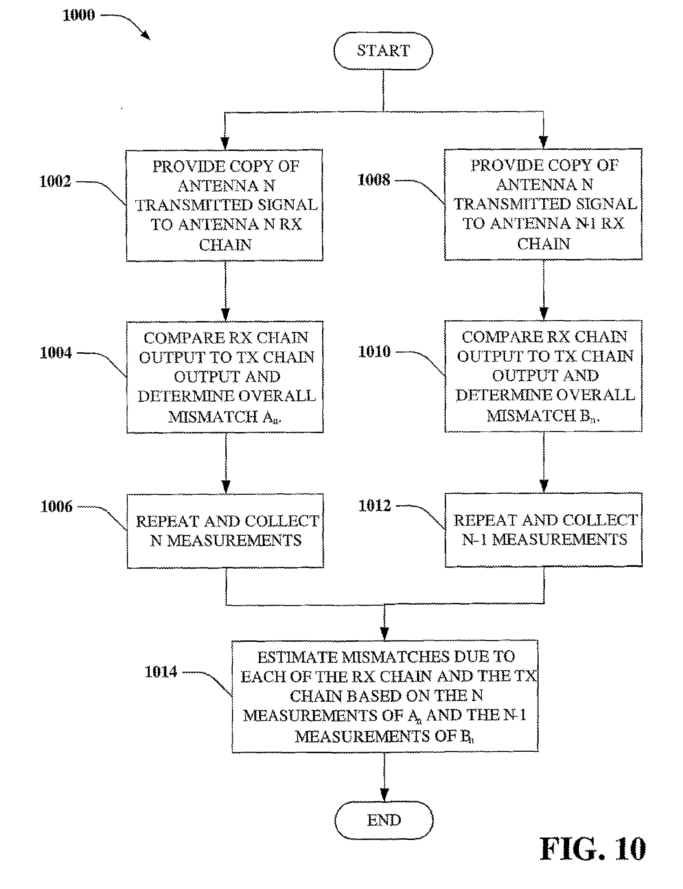

**Fig. 10** illustrates a methodology 1000 for calibrating an antenna array in accordance with various aspects set forth herein. At 1002, a copy of a signal transmitted from a transmit chain of a first antenna, antenna n, can be provided to the receiver chain of antenna $n$ at a time when the receiver chain is not receiving a signal (*e.g.*, during transmission). A receiver chain output signal for antenna $n$ can be compared to the transmitted signal copy to determine an overall gain mismatch $A_n$, at 1004. At 1006, the acts of 1002 and 1004 can be repeated for all other antennas, 1 through $n$-1, in the array, to collect a total of N measurements (*e.g.*, one measurement for each of the $N$ antennas in the array).

Subsequently or concurrently with acts 1002-1006, a copy of the transmitted signal from antenna n can be provided to a receive chain of antenna $n$-1, at 1008. At 1010, the receive chain output for antenna $n$-1 can be compared to the transmitted signal copy of antenna $n$ to determine overall mismatch $B_n$. At 1012, acts 1008 and 1010 can be repeated for all other antennas in the array, 1 through $n$-1, to collect $N$-1 measurements.

At 1014, estimates of gain mismatch due to the receive chains, $\alpha_n$, and transmit chains, $\beta_n$, can be generated based on the N measurements of $A_n$ and the $N$-1 measurements of $B_n$, such that:

$$\alpha_n = \alpha.\prod_{i=2}^{n} \frac{A_i}{B_i} \quad n = 2,...,N \qquad\qquad (8)$$

and

$$\beta_n = \beta.\prod_{i=2}^{n} \frac{B_i}{A_{i-1}} \qquad\qquad (9)$$

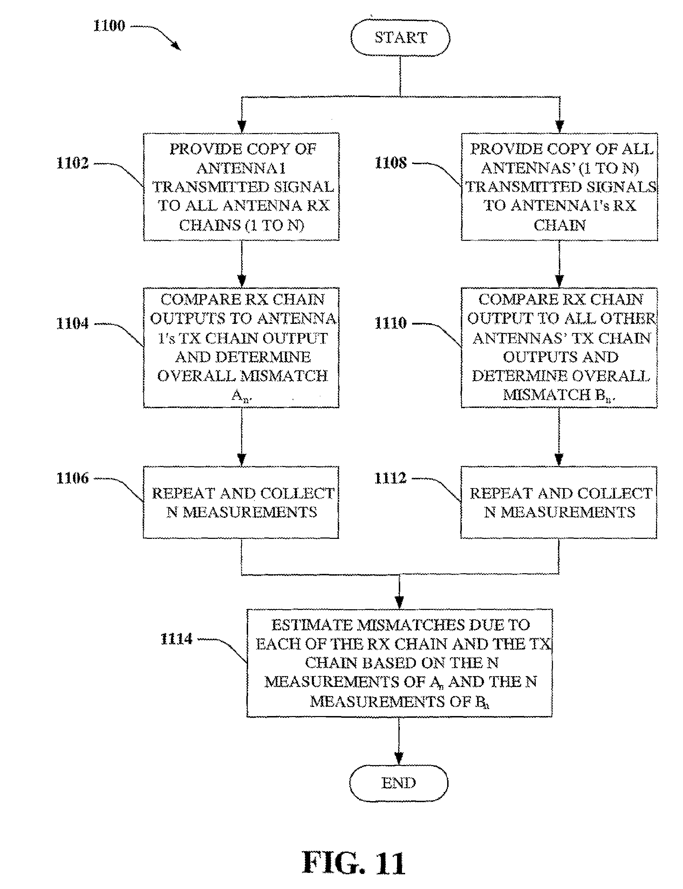

**Fig. 11** is an illustration of a methodology 1100 for calibrating an antenna array utilizing a technique similar to that described with regard to Fig. 3, above. At 1102, during transmission or at a time when receive chains of antennas in the array are not receiving, a copy of a transmitted signal from the transmit chain of antenna $n$ can be provided to the receive chains of all antennas in the array, 1 through $n$. At 1104, the copy of the transmitted signal from antenna $n$ can be compared to an output signal from individual receive chains of respective antennas 1 through n to determine overall mismatch $A_n$. At 1106, acts 1102 and 1104 can be repeated to obtain $N$ measurements of $A_n$ (*e.g.*, acts 1102 and 1104 can be reiterated for each antenna in the array).

Subsequently or concurrently, and while receive chains are not receiving, copies of all transmitted signals from antennas 1 through $n$ can be provided to the receive chain of antenna 1, at 1108. At 1110, the receive chain output signal of antenna 1 can be compared to the copies of all transmitted signals to determine overall mismatch $B_n$. At 1112, acts 1108 and 1110 can be reiterated for each antenna to collect $N$ measurements of $B_n$.

At 1114, given the N measurements of $A_n$ and the $N$ measurements of $B_n$, receive chain mismatch $\alpha_n$ and transmit chain mismatch $\beta_n$ can be estimated such that:

$$\alpha_n = \alpha \cdot \frac{A_n}{A_1} \quad n = 2,...,N \qquad (10)$$

and

$$\beta_n = \beta \cdot \frac{B_n}{B_1} \quad n = 2,...,N \qquad (11)$$

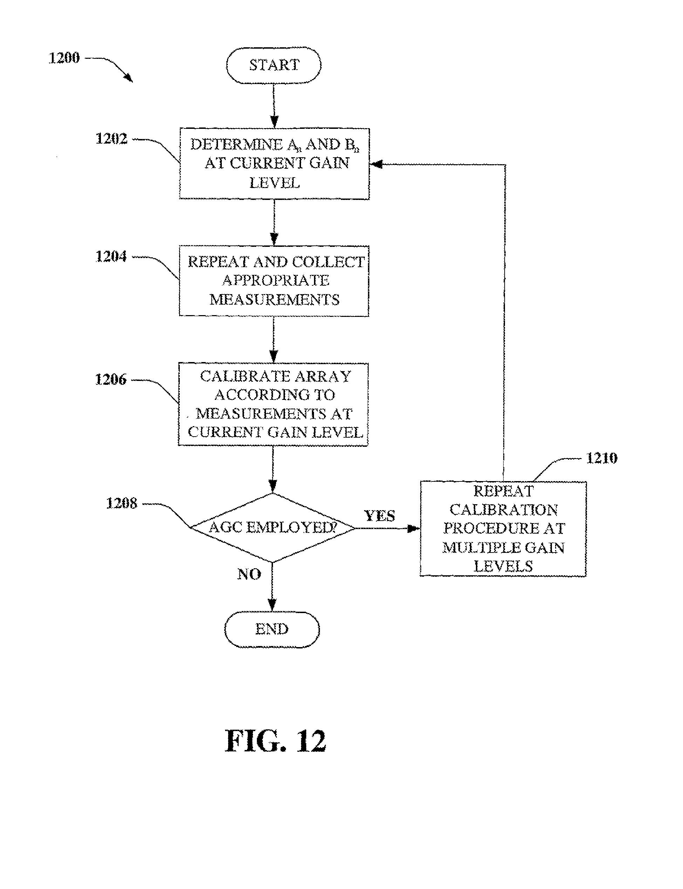

**Fig. 12** illustrates a methodology 1200 for calibrating an antenna array when automatic gain control is employed. At 1202, $A_n$ and $B_n$ can be determined using the methods of Figs., 2, 3, 10, and/or 11, at a current gain level. At 1204, act 1202 can be repeated to collect an appropriate number of measurements *(e.g., N* measurements of $A_n$, and *N* or *N*-1 measurements of $B_n$, depending on the technique employed). At 1206, the antenna array can be calibrated as described with regard to the preceding figures, and according to the measurements obtained at 1204 at the current gain level. At 1208, a determination can be made regarding whether automatic gain control (AGC) is employed in the antenna array. If the determination at 1208 indicates that AGC is not employed, then method 1200 can terminate.

If however, the determination at 1208 indicates that AGC is active in the antenna array, then at 1210, the calibration procedure can be repeated at multiple gain levels. For instance, at 1210 a gain level for the array can be adjusted and the method can revert to 1202 for further iterations. Additionally, method 1200 can be reiterated until measurements and/or calibration has occurred at every gain level utilized in conjunction with the AGC technique. When such gains are employed again in the future, stored calibration models related to respective gains can be employed.

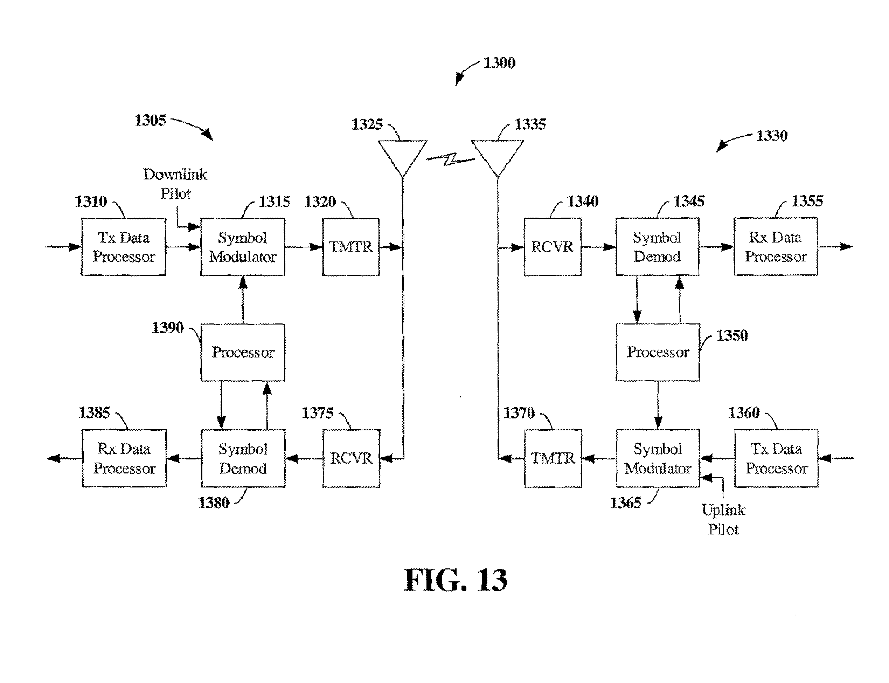

**Fig. 13** shows an exemplary wireless communication system 1300. The wireless communication system 1300 depicts one base station and one terminal for sake of brevity. However, it is to be appreciated that the system can include more than one base station and/or more than one terminal, wherein additional base stations and/or terminals can be substantially similar or different for the exemplary base station and terminal described below. In addition, it is to be appreciated that the base station and/or the terminal can employ the systems **(Figs. 1-7)** and/or methods **(Figs. 8-12)** described herein to facilitate wireless communication there between.

Referring now to **Fig. 13,** on a downlink, at access point 1305, a transmit (TX) data processor 1310 receives, formats, codes, interleaves, and modulates (or symbol maps) traffic data and provides modulation symbols ("data symbols"). A symbol modulator 1315 receives and processes the data symbols and pilot symbols and provides a stream of symbols. A symbol modulator 1320 multiplexes data and pilot symbols on the proper subbands, provides a signal value of zero for each unused subband, and obtains a set of N transmit symbols for the N subbands for each symbol period. Each transmit symbol may be a data symbol, a pilot symbol, or a signal value of zero. The pilot symbols may be sent continuously in each symbol period. It will be appreciated that the pilot symbols may be time division multiplexed (TDM), frequency division multiplexed (FDM), orthogonal frequency division multiplexed (OFDM), code division multiplexed (CDM), *etc.* Symbol modulator 1320 can transform each set of *N* transmit symbols to the time domain using an *N*-point IFFT to obtain a "transformed" symbol that contains N time-domain chips. Symbol modulator 1320 typically repeats a portion of each transformed symbol to obtain a corresponding symbol. The repeated portion is known as a cyclic prefix and is used to combat delay spread in the wireless channel.

A transmitter unit (TMTR) 1320 receives and converts the stream of symbols into one or more analog signals and further conditions (*e.g.*, amplifies, filters, and frequency upconverts) the analog signals to generate a downlink signal suitable for transmission over the wireless channel. The downlink signal is then transmitted through an antenna 1325 to the terminals. At terminal 1330, an antenna 1335 receives the downlink signal and provides a received signal to a receiver unit (RCVR) 1340. Receiver unit 1340 conditions (*e.g.*, filters, amplifies, and frequency downconverts) the received signal and digitizes the conditioned signal to obtain samples. A symbol demodulator 1345 removes the cyclic prefix appended to each symbol, transforms each received transformed symbol to the frequency domain using an N-point FFT, obtains N received symbols for the N subbands for each symbol period, and provides received pilot symbols to a processor 1350 for channel estimation. Symbol demodulator 1345 further receives a frequency response estimate for the downlink from processor 1350, performs data demodulation on the received data symbols to obtain data symbol estimates (which are estimates of the transmitted data symbols), and provides the data symbol estimates to an RX data processor 1355, which demodulates (*e.g.*, symbol demaps), deinterleaves, and decodes the data symbol estimates to recover the transmitted traffic data. The processing by symbol demodulator 1345 and RX data processor 1355 is complementary to the processing by symbol modulator 1315 and TX data processor 1310, respectively, at access point 1300.

On the uplink, a TX data processor 1360 processes traffic data and provides data symbols. A symbol modulator 1365 receives and multiplexes the data symbols with pilot symbols, performs modulation, and provides a stream of symbols. The pilot symbols may be transmitted on subbands that have been assigned to terminal 1330 for pilot transmission, where the number of pilot subbands for the uplink may be the same or different from the number of pilot subbands for the downlink. A transmitter unit 1370 then receives and processes the stream of symbols to generate an uplink signal, which is transmitted by the antenna 1335 to the access point 1310.

At access point 1310, the uplink signal from terminal 1330 is received by the antenna 1325 and processed by a receiver unit 1375 to obtain samples. A symbol demodulator 1380 then processes the samples and provides received pilot symbols and data symbol estimates for the uplink. An RX data processor 1385 processes the data symbol estimates to recover the traffic data transmitted by terminal 1335. A processor 1390 performs channel estimation for each active terminal transmitting on the uplink. Multiple terminals may transmit pilot concurrently on the uplink on their respective assigned sets of pilot subbands, where the pilot subband sets may be interlaced.

Processors 1390 and 1350 direct (*e.g.*, control, coordinate, manage, *etc.)* operation at access point 1310 and terminal 1335, respectively. Respective processors 1390 and 1350 can be associated with memory units (not shown) that store program codes and data. Processors 1390 and 1350 can also perform computations to derive frequency and impulse response estimates for the uplink and downlink, respectively.

For a multiple-access system (*e.g.*, a frequency division multiple-access (FDMA) system, an orthogonal frequency division multiple-access (OFDMA) system, a code division multiple-access (CDMA) system, a time division multiple-access (TDMA) system, *etc.*), multiple terminals may transmit concurrently on the uplink. For such a system, the pilot subbands may be shared among different terminals. The channel estimation techniques may be used in cases where the pilot subbands for each terminal span the entire operating band (possibly except for the band edges). Such a pilot subband structure would be desirable to obtain frequency diversity for each terminal. The techniques described herein may be implemented by various means. For example, these techniques may be implemented in hardware, software, or a combination thereof. For a hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (*e.g.*, procedures, functions, and so on) that perform the functions described herein. The software codes may be stored in memory unit and executed by the processors 1390 and 1350.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

In the following, further embodiments are described to facilitate the understanding of the invention:

In one aspect of a further embodiment a method of calibrating an antenna array in a wireless network, is described, the method comprising providing a copy of an output transmit signal from a transmit chain of a first antenna to a receive chain of the first antenna; and comparing the copy of the output transmit signal to an output receive chain signal and determining a first overall gain mismatch measurement, $A_n$. The method may further comprise iterating comparisons for n antennas in the array to collect n measurements of $A_n$, where n is an integer. Further, the method may comprise providing the copy of the output transmit signal from the first antenna to a receive chain of a second antenna; and comparing the copy of the output transmit signal to an output receive chain signal of the second antenna and determining a second overall gain mismatch measurement, $B_n$, and iterating for n-1 antennas in the array to collect n-1 measurements of $B_n$, where n is an integer. Also, the method may comprise determining receiver chain mismatch and transmit chain mismatch based at least in part on the n measurements of $A_n$ and the n-1 measurements of $B_n$. Further, the method may comprise employing a time domain duplexing protocol to transmit and receive signals in the wireless network. The method may further comprise providing the copy of the transmitted signal to the receive chain for comparison during a period in which the receive chain is dormant. Also, the method may comprise providing the copy of the transmitted signal to the receive chain for comparison during a period in which the first antenna is transmitting. Further, providing a copy may comprise providing copies of a plurality of signals and comparing the copy comprises comparing each of the copies and determining the first overall gain mismatch measurement to be an average of the mismatch measurements for the plurality of copies, wherein the plurality of signals may correspond to signals transmitted at different time periods.

In yet another aspect of a further embodiment, a method of calibrating an antenna array in a wireless network, is described, the method comprising providing an output transmit signal from a transmit chain of a first antenna to receive chains of all antennas in the array; and comparing the output transmit signal to an output receive chain signal at each antenna in the array and determining a first overall gain mismatch measurement, $A_n$. The method may further comprise iterating the method for each antenna in the array to collect n measurements of $A_n$, where n is an integer. Also, the method may comprise providing a copy of an output transmit signal from each antenna in the array to a receive chain of the first antenna; and comparing the output transmit signals to an output receive chain signal of the first antenna and determining a second overall gain mismatch measurement, $B_n$. Further, the method may comprise iterating the method for each antenna in the array to collect n measurements of $B_n$, where n is an integer, wherein determining receive chain mismatch and transmit chain mismatch based at least in part on the n measurements of $A_n$ and the n measurements of $B_n$. Further, the method may comprise employing a time domain duplexing protocol to transmit and receive signals in the wireless network. Also, the method may comprise providing the transmitted signal to the receive chain for comparison during a period in which the receive chain is dormant. The method may further comprise providing the transmitted signal to the receive chain for comparison during a period in which the first antenna is transmitting. Also, providing the transmitted signal may comprise providing a plurality of transmitted signals from the first transmitter chain to receive chains of all antennas in the array and comparing comprises comparing each of the transmitted signals at the receive chains of all antennas in the array and determining the first overall gain mismatch measurement to be an average of the mismatch measurements for the plurality of transmitted signals, wherein the plurality of transmitted signals corresponds to signals transmitted at different time periods.

In yet another aspect of a further embodiment, an apparatus that facilitates calibrating an antenna array, is described, the apparatus comprising a calibration component that generates a receive chain output signal for each antenna in the array; a sampling component that generates a copy of a transmit chain output signal for antennas in the array; and a mismatch estimation component that determines gain mismatch attributable to transmit chains of antennas in the array and to receive chains of antennas in the array. Thereby, the calibration component may provide a copy of a first antenna transmit chain output to a receive chain of the first antenna. Also, the calibration component may compare the copy of the transmit chain output of the first antenna to the receive chain output signal for the first antenna to determine a mismatch measurement $A_n$. Also, the calibration component may perform an iteration of the comparison of a transmit chain output signal to a receive chain output signal for each antenna in the array to obtain n measurements of $A_n$, where n is the number of antennas in the array. The calibration component may also provide the copy of the first antenna transmit chain output signal to a receive chain of a next antenna in the array and may perform a comparison to determine a mismatch measurement $B_n$. Also, the calibration component may perform an iteration of the comparison of the first antenna transmit chain output signal to the next antenna receive chain output signal for each antenna in the array to obtain n-1 measurements of $B_n$, where n is the number of antennas in the array. The mismatch estimation component may estimate gain mismatch due to receive chains across the antenna array based at least in part on the n measurements of $A_n$ and the n-1 measurements of $B_n$. Further, the mismatch estimation component may estimate gain mismatch due to transmit chains across the antenna array based at least in part on the n measurements of $A_n$ and the n-1 measurements of $B_n$. The calibration component may generate a multiplier by which the transmit chain output signals of one or more antennas in the array are pre-multiplied to compensate for gain mismatch due to at least one of the receiver chains and the transmit chains in the antenna array to calibrate the array. Further, the calibration component, for each antenna, may provide a copy of a given antenna transmit chain output signal generated by the sampling component to the receive chain of every antenna in the array and may compare a receive chain output signal for every antenna in the array to the transmit chain output signal copy to obtain n gain mismatch measurements $A_n$, where n is the number of antennas in the array. Further, the calibration component, for each antenna, may provide a copy of a transmit chain output signal from every antenna in the array to the receive chain of the given antenna and may compare the copies of the transmit chain output signals to a receive chain output signal of the given antenna to obtain n gain mismatch measurements $B_n$, where n is the number of antennas in the array. Also, the mismatch estimation component may estimate gain mismatch due to transmit chains across the antenna array based at least in part on the n measurements of $A_n$ and the n measurements of $B_n$. Further, the calibration component may generate a multiplier by which the transmit chain output signals of one or more antennas in the array are pre-multiplied to compensate for gain mismatch due to at least one of the receiver chains and the transmit chains in the antenna array to calibrate the array. Also, the wireless network may employ a time domain duplexed communication protocol, wherein comparisons of transmit chain output signals and receive chain output signals may be performed during a transmission period. Further, the mismatch estimation component may determine gain mismatch by averaging a gain mismatch over a plurality of transmit chain output signals.

In another aspect of a further embodiment an apparatus that facilitates calibrating an antenna array and mitigating gain mismatch in a wireless network, is described, the apparatus comprising means for copying a transmit chain output signal transmitted from each antenna in the array; and means for comparing the transmit chain output signal copy of each antenna to a receive chain output signal from every antenna in the array to obtain a plurality of gain mismatch measurements. The apparatus may further comprise means for estimating gain mismatch due to the transmit chains of antennas in the array and gain mismatch due to the receive chains in the array. Also, the apparatus may comprise means for compensating for gain mismatch to calibrate the array. Further, the apparatus may comprise means for compensating generating a multiplier by which transmitted signals are pre-multiplied to offset estimated gain mismatch. Also, the wireless network may employ a time division duplexed channel transmission technique.

In yet another aspect of a further embodiment, a computer-readable medium having stored thereon computer-executable instructions for generating a transmit chain output signal transmitted from antennas in an antenna array; and comparing the transmit chain output signal of each antenna to a receive chain output signal from the antennas to obtain a plurality of gain mismatch measurements, is described. The computer-readable medium may further comprise instructions for determining gain mismatch due to the receive chains of antennas in the array based at least in part on the plurality of gain mismatch measurements. Further, the computer-readable medium may comprise instructions for compensating for receive chain gain mismatch by generating a pre-multiplier by which a signal to be transmitted can be adjusted. Also, the computer-readable medium may comprise instructions for determining gain mismatch due to the transmit chains of antennas in the array based at least in part on the plurality of gain mismatch measurements. Further, the computer-readable medium may comprise instructions for compensating for transmit chain gain mismatch by generating a pre-multiplier by which a signal to be transmitted can be adjusted. Also, the computer-readable medium of claim may comprise instructions for comparing transmit chain output signal to a receive chain output signal when the receive chain is not receiving an input signal.

## Claims

1. A method of calibrating an antenna array (200, 300, 404, 504, 604, 704) comprising N antennas (202, 204, 206, 208, 210, 302) in a wireless network, comprising:

   providing (1008) a first copy of an output transmit signal from an $n^{th}$ antenna (202, 204, 206, 208, 210, 302) to a receive chain of a $(n-1)^{th}$ antenna (202, 204, 206, 208, 210, 302), where n is an integer greater than or equal to 2 and less than or equal to N;
   comparing (1010) the first copy of the output transmit signal to an output receive chain signal of the $(n-1)^{th}$ antenna (202, 204, 206, 208, 210, 302) to determine a first overall gain mismatch measurement, $B_n$;
   iterating (1012) the providing the first copy and the comparing the first copy for N-1 antennas (202, 204, 206, 208, 210, 302) in the array (200, 300, 404, 504, 604, 704) to collect N-1 measurements of $B_n$ for n=2 through N; and determining a first chain mismatch based at least in part on the N-1 measurements of $B_n$.

2. The method of claim 1, further comprising:

   providing a second copy of an output transmit signal from a transmit chain of the $n^{th}$ antenna (202, 204, 206, 208, 210, 302) to a receive chain of the $n^{th}$ antenna (202, 204, 206, 208, 210, 302), where n is a non-zero integer less than or equal to N; and
   comparing the second copy of the output transmit signal to an output receive chain signal of the $n^{th}$ antenna (202, 204, 206, 208, 210, 302) to determine a second overall gain mismatch measurement, $A_n$.

3. The method of claim 2, further comprising:

   iterating the providing the second copy and the comparing the second copy for N antennas (202, 204, 206, 208, 210, 302) in the array (200, 300, 404, 504, 604, 704) to collect N measurements of $A_n$ for n=1 through N.

4. The method of claim 3, further comprising:

   determining a second chain mismatch based at least in part on the N measurements of $A_n$.

5. The method of claim 3, further comprising:

   determining that automatic gain control (108) is employed in the antenna array (200, 300, 404, 504, 604, 704); and
   collecting the N measurements of $A_n$ and the N-1 measurements of $B_n$ at least two times using respective at least two disparate gain levels if it is determined that automatic gain control (108) is employed.

6. The method of claim 1, further comprising employing a time domain duplexing protocol to transmit and receive signals in the wireless network.

7. The method of claim 2, further comprising providing the second copy of the transmitted signal to the receive chain of the $n^{th}$ antenna (202, 204, 206, 208, 210, 302) for comparison during a period in which the receive chain of the $n^{th}$ antenna (202, 204, 206, 208, 210, 302) is dormant.

8. The method of claim 2, further comprising providing the second copy of the transmitted signal to the receive chain of the $n^{th}$ antenna (202, 204, 206, 208, 210, 302) for comparison during a period in which the $n^{th}$ antenna (202, 204, 206, 208, 210, 302) is transmitting.

9. The method of claim 1, wherein the providing a first copy comprises providing copies of a plurality of signals and the comparing the first copy comprises comparing each of the copies of the plurality of signals and determining the first overall gain mismatch measurement to be an average of mismatch measurements for the copies of the plurality of signals.

10. The method of 9, wherein the plurality of signals corresponds to signals transmitted at different time periods.

11. An apparatus for calibrating an antenna array (200, 300, 404, 504, 604, 704) comprising N antennas (202, 204, 206, 208, 210, 302) in a wireless network, comprising:

   means for providing a first copy of an output transmit signal from an $n^{th}$ antenna (202, 204, 206, 208, 210, 302) to a receive chain of a $(n-1)^{th}$ antenna (202, 204, 206, 208, 210, 302), where n is an integer greater than or equal to 2 and less than or equal to N;
   means for comparing the first copy of the output transmit signal to an output receive chain signal of the $(n-1)^{th}$ antenna (202, 204, 206, 208, 210, 302) to determine a first overall gain mismatch measurement, $B_n$;
   means for iterating the providing the first copy and the comparing the first copy for N-1 antennas (202, 204, 206, 208, 210, 302) in the array (200, 300, 404, 504, 604, 704) to collect N-1 measurements of $B_n$ for n=2 through N;
   and
   means for determining a first chain mismatch based at least in part on the N-1 measurements of $B_n$.

12. The apparatus of claim 11, further comprising:

   means for providing a second copy of an output transmit signal from a transmit chain of the $n^{th}$ antenna (202, 204, 206, 208, 210, 302) to a receive chain of the $n^{th}$ antenna (202, 204, 206, 208, 210, 302), where n is a non-zero integer less than or equal to N; and
   means for comparing the second copy of the output transmit signal to an output receive chain signal of the $n^{th}$ antenna (202, 204, 206, 208, 210, 302) to determine a second overall gain mismatch measurement, $A_n$.

13. The apparatus of claim 11, further comprising:

   means for iterating the providing the second copy and the comparing the second copy for N antennas (202, 204, 206, 208, 210, 302) in the array (200, 300, 404, 504, 604, 704) to collect N measurements of $A_n$ for n=1 through N.

14. The apparatus of claim 11, further comprising
   a sampling component that retrieves a first copy of an output transmit signal from an $n^{th}$ antenna (202, 204, 206, 208, 210, 302) in the antenna array (200, 300, 404, 504, 604, 704);
   a calibration component (402, 502, 602, 702) as means for providing and comparing, wherein the calibration component (402, 502, 602, 702) provides the first copy to a receive chain of a $(n-1)^{th}$ antenna (202, 204, 206, 208, 210, 302) in the antenna array (200, 300, 404, 504, 604, 704) and compares the first copy to an output receive chain signal of the $(n-1)^{th}$ antenna (202, 204, 206, 208, 210, 302) to determine a first overall gain mismatch measurement $B_n$, where n is an integer greater than or equal to 2 and less than or equal to N, wherein the calibration component (402, 502, 602, 702) iterates providing the first copy of the output transmit signal from the $n^{th}$ antenna (202, 204, 206, 208, 210, 302) to the receive chain of the $(n-1)^{th}$ antenna (202, 204, 206, 208, 210, 302) and comparing the first copy to the output receive chain of the $(n-1)^{th}$ antenna (202, 204, 206, 208, 210, 302) for N-1 antennas (202, 204, 206, 208, 210, 302) in the array (200, 300, 404, 504, 604, 704) to collect N-1 measurements of $B_n$ for n=2 through N; and a mismatch estimation component (508, 608, 708) as means for determining a first chain mismatch based at least in part on the N-1 measurements of $B_n$.

**15.** A computer-readable medium having stored thereon computer-executable instructions for performing a method according to any of claims 1 to 10.

FIG. 1

FIG. 2

FIG. 3

FIG. 4

— 500

— 502

CALIBRATION COMPONENT

MISMATCH
ESTIMATOR

508 —

ANTENNA ARRAY

504 —

SAMPLING
COMPONENT

— 506

# FIG. 5

600

612 PROCESSOR

610 MEMORY

602 CALIBRATION COMPONENT

MISMATCH ESTIMATOR

608

604 ANTENNA ARRAY

606 SAMPLING COMPONENT

# FIG. 6

FIG. 7

800

START

802 — DETERMINE GAIN MISMATCHES

804 — COLLECT GAIN MEASUREMENTS

806 — CALIBRATE ANTENNA ARRAY BASED ON MEASUREMENT INFORMATION

END

# FIG. 8

900

START

902 — ASSESS RECEIVER INPUT SIGNAL FOR ANTENNA N

904 — DOWN CONVERT SIGNAL TO DIGITAL BASEBAND

906 — ESTIMATE MULTIPLICATIVE MISMATCH GAINS DUE TO RECEIVE CHAIN AND TRANSMIT CHAIN

908 — PRE-MULTIPLY TRANSMITTED SIGNAL FROM ANTENNA N

910 — CALIBRATE ANTENNA ARRAY

END

# FIG. 9

1000

START

1002 — PROVIDE COPY OF ANTENNA N TRANSMITTED SIGNAL TO ANTENNA N RX CHAIN

1008 — PROVIDE COPY OF ANTENNA N TRANSMITTED SIGNAL TO ANTENNA N-1 RX CHAIN

1004 — COMPARE RX CHAIN OUTPUT TO TX CHAIN OUTPUT AND DETERMINE OVERALL MISMATCH $A_n$.

1010 — COMPARE RX CHAIN OUTPUT TO TX CHAIN OUTPUT AND DETERMINE OVERALL MISMATCH $B_n$.

1006 — REPEAT AND COLLECT N MEASUREMENTS

1012 — REPEAT AND COLLECT N-1 MEASUREMENTS

1014 — ESTIMATE MISMATCHES DUE TO EACH OF THE RX CHAIN AND THE TX CHAIN BASED ON THE N MEASUREMENTS OF $A_n$ AND THE N-1 MEASUREMENTS OF $B_n$

END

**FIG. 10**

1100

START

1102 — PROVIDE COPY OF ANTENNA 1 TRANSMITTED SIGNAL TO ALL ANTENNA RX CHAINS (1 TO N)

1108 — PROVIDE COPY OF ALL ANTENNAS' (1 TO N) TRANSMITTED SIGNALS TO ANTENNA 1's RX CHAIN

1104 — COMPARE RX CHAIN OUTPUTS TO ANTENNA 1's TX CHAIN OUTPUT AND DETERMINE OVERALL MISMATCH $A_n$.

1110 — COMPARE RX CHAIN OUTPUT TO ALL OTHER ANTENNAS' TX CHAIN OUTPUTS AND DETERMINE OVERALL MISMATCH $B_n$.

1106 — REPEAT AND COLLECT N MEASUREMENTS

1112 — REPEAT AND COLLECT N MEASUREMENTS

1114 — ESTIMATE MISMATCHES DUE TO EACH OF THE RX CHAIN AND THE TX CHAIN BASED ON THE N MEASUREMENTS OF $A_n$ AND THE N MEASUREMENTS OF $B_n$

END

# FIG. 11

1200

START

1202 — DETERMINE $A_n$ AND $B_n$ AT CURRENT GAIN LEVEL

1204 — REPEAT AND COLLECT APPROPRIATE MEASUREMENTS

1206 — CALIBRATE ARRAY ACCORDING TO MEASUREMENTS AT CURRENT GAIN LEVEL

1208 — AGC EMPLOYED?

YES

1210 — REPEAT CALIBRATION PROCEDURE AT MULTIPLE GAIN LEVELS

NO

END

# FIG. 12

**FIG. 13**

EP 2 249 435 A1

Europäisches
Patentamt

European
Patent Office

Office européen
des brevets

# EUROPEAN SEARCH REPORT

Application Number

EP 10 17 2290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 104 122 A (SANYO ELECTRIC CO., LTD) 30 May 2001 (2001-05-30) * page 7, line 5 - page 13, line 6 * * figures 1-8 * * abstract * ----- | 1-4,6-15 | INV. H01Q3/26 ADD. H04B7/08 |
| A | US 2003/227408 A1 (SANADA YUKITOSHI ET AL) 11 December 2003 (2003-12-11) * page 8, paragraph 129 - page 11, paragraph 182 * * figures 3-5 * * abstract * ----- | 1-15 | |

TECHNICAL FIELDS
SEARCHED      (IPC)

H01Q
H04B

The present search report has been drawn up for all claims

| Place of search | Date of completion of the search | Examiner |
|---|---|---|
| Munich | 23 September 2010 | von Walter, Sven-Uwe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 2290

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2010

| Patent document cited in search report | | Publication date | Patent family member(s) | | Publication date |
|---|---|---|---|---|---|
| EP 1104122 | A | 30-05-2001 | AU | 757396 B2 | 20-02-2003 |
| | | | AU | 4933599 A | 28-02-2000 |
| | | | CN | 1322414 A | 14-11-2001 |
| | | | DE | 69936210 T2 | 17-01-2008 |
| | | | HK | 1042603 A1 | 18-02-2005 |
| | | | ID | 27970 A | 03-05-2001 |
| | | | WO | 0008777 A1 | 17-02-2000 |
| | | | JP | 3332911 B2 | 07-10-2002 |
| | | | US | 6870878 B1 | 22-03-2005 |
| US 2003227408 | A1 | 11-12-2003 | JP | 3890988 B2 | 07-03-2007 |
| | | | JP | 2003218758 A | 31-07-2003 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 67419005 P